**Europäisches Patentamt**

**European Patent Office**

**Office européen des brevets**

(19)

(11) Numéro de publication: **0 006 902**
**B1**

(12) **FASCICULE DE BREVET EUROPEEN**

(45) Date de publication du fascicule de brevet: **04.11.81**

(51) Int. Cl.³: **F 16 K  31/44, F 16 K  5/00**

(21) Numéro de dépôt: **78900104.7**

(22) Date de dépôt: **22.08.78**

(86) Numéro de dépôt international:
**PCT/FR78/00017**

(87) Numéro de publication internationale:
**WO 79/00126 22.03.79 Gazette 79/6**

(54) **Robinet à obturateur commandé par une tige.**

(30) Priorité: **30.08.77 FR  7726317**

(43) Date de publication de la demande:
**23.01.80 Bulletin 80/2**

(45) Mention de la délivrance du brevet:
**04.11.81 Bulletin 81/44**

(84) Etats Contractants Désignés:
**CH DE GB**

(56) Documents cités:
**DE - A - 1 959 382**
**FR - A - 2 255 524**
**GB - A - 1 197 081**
**US - A - 3 370 144**

(73) Titulaire: **Gachot, Jean**
**26 bis, avenue de Paris**
**F-95230 Soisy sous Montmorency (FR)**

(72) Inventeur: **Gachot, Jean**
**26 bis, avenue de Paris**
**F-95230 Soisy sous Montmorency (FR)**

(74) Mandataire: **Bouju, André**
**Cabinet Bouju 38 avenue de la Grande Armée**
**F-75017 Paris (FR)**

Courier Press, Leamington Spa, England.

Robinet à obturateur commandé par une tige

La présente invention concerne un robinet comprenant un obturateur tel que boule, boisseau ou analogue, commandé par une tige montée rotativement dans un alésage du corps du robinet.

Dans les robinets connus de ce type, la tige est amovible par rapport à l'obturateur. Lors du montage d'un tel robinet la tige est engagée dans l'alésage du corps par l'extérieur de ce dernier, c'est-à-dire par l'extrémité de l'alésage opposée à l'obturateur. La liaison amovible entre la tige et l'obturateur est assurée généralement par une jonction du type tenon et mortaise ou analogue. L'étanchéité entre la tige et l'alésage du corps du robinet est assurée par une garniture de presse-étoupe qui est maintenue en place au moyen d'un fouloir qui est vissé dans l'alésage de la tige de façon à comprimer la garniture précitée. Dans de tels robinets, la tige de l'obturateur est calée axialement par rapport au corps du robinet d'une part par son extrémité en butée contre l'obturateur et d'autre part par une collerette sur laquelle est pressée la garniture d'étanchéité au moyen du fouloir.

L'expérience a montré qu'un tel calage axial de la tige de commande de l'obturateur ne donnait pas entière satisfaction.

En effet, lorsque le fouloir de la garniture de presse-étoupe est mal vissé ou insuffisamment vissé dans l'alésage du corps du robinet, ce fouloir peut se dévisser davantage lors d'une fausse manoeuvre ou sous l'effet de la pression exercée par le fluide contenu dans le corps du robinet. Le dévissage complet du fouloir entraîne ainsi l'éjection de la tige de commande vers l'extérieur et par suite, l'échappement du fluide dans l'atmosphère. L'échappement de ce fluide peut entraîner de graves conséquences lors de l'utilisation de fluides corrosifs, toxiques, inflammables, précieux et/ou sous très haute pression.

Par ailleurs, étant donné que l'éjection de la tige de ces robinets peut être effectuée simplement en dévissant le fouloir, il est aisé de saboter les installations comprenant de tels robinets.

Les inconvénients des dispositifs précités sont évités dans le cas des robinets connus selon DE—A—1959382 comportant une tige de commande de l'obturateur munie à son extrémité adjacente à l'obturateur d'une butée qui empêche l'éjection de la tige vers l'extérieur. De telles tiges ne sont toutefois utilisables que dans le cas de robinets à très forte section de passage, de façon à ce qu'il soit possible d'engager la tige dans son alésage par l'intérieur du corps du robinet.

Dans le cas de robinets à section de passage faible, l'engagement de la tige par l'intérieur du corps du robinet est en effet impossible car la longueur de la tige est généralement nettement supérieure à la section intérieure de corps du robinet, pour permettre une mise en place de la tige.

Le but de l'invention est de remédier aux inconvénients des réalisations précitées, en présentant un robinet dont la tige de commande de l'obturateur, engagée dans l'alésage correspondant du corps par l'extérieur de celui-ci, n'est pas éjectable vers l'extérieur, même après dévissage du fuoloir du presse-étoupe et ce, indépendamment de la longueur relative de cette tige par rapport à la section intérieure du corps du robinet.

Suivant l'invention, ce robinet est caractérisé en ce que l'extrémité de la tige adjacente à l'obturateur comprend des moyens pour verrouiller axialement la tige par rapport au corps du robinet après engagement de la tige dans l'alésage de ce corps.

Ces moyens de verrouillage de la tige de commande de l'obturateur empêchent ainsi l'éjection de cette dernière, tout en permettant à celle-ci d'être introduite par l'extrémité de l'alésage opposée à l'obturateur. De ce fait, l'invention est applicable quelles que soient la section du corps du robinet et la longueur de la tige.

Selon une version avantageuse de l'invention, l'extrémité de la tige comprend une collerette filetée et l'alésage du corps du robinet comporte un étranglement annulaire taraudé correspondant au filetage de la collerette de la tige, cette collerette faisant saillie à l'avant de l'étranglement précité après engagement complet de la tige dans l'alésage du corps.

La tige est ainsi montée dans l'alésage du corps du robinet en vissant la collerette filetée dans l'étranglement taraudé de l'alésage précité. Après engagement complet de la tige dans l'alésage, les filets de la collerette et de l'étranglement s'opposent à l'éjection de la tige vers l'extérieur.

Selon une autre version du robinet conforme à l'invention, l'extrémité de la tige comprend une gorge annulaire, recevant deux demi-colliers de verrouillage faisant saillie à l'avant d'un étranglement annulaire ménagé dans l'alésage du corps, ces deux demi-colliers de verrouillage étant calés radialement par l'extrémité adjacente de l'alésage du corps.

Ces demi-colliers de verrouillage sont mis en place dans la gorge correspondante de la tige après engagement complet de cette dernière dans l'alésage du corps. De tels demi-colliers permettent un excellent verrouillage axial de la tige, mais rendent légèrement plus compliqué le montage de la tige que dans le cas de la version précédente.

Selon une version préférée du robinet conforme à l'invention, l'extrémité de la tige comprend deux protubérances diamétrales faisant saillie à l'avant d'un étranglement ménagé dans l'alésage du corps, cet étranglement comportant deux évidements opposés dont le profil correspond à celui des protubérances, ces protubérances étant décalées angulairement par rapport aux évidements correspondants en position d'ouverture ou de fermeture de l'obturateur.

Les évidements de l'étranglement de l'alésage permettent le passage des protubérances diamétrales de la tige, lorsque ces dernières sont alignées avec les évidements. Après engagement complet de la tige dans l'alésage, on tourne cette tige pour obtenir un certain décalage entre les protubérances et les évidements. Cette disposition permet par conséquent un excellent verrouillage axial de la tige par rapport au corps du robinet, tout en autorisant un montage simple, sans pièces annexes, de cette tige.

D'autres particularités et avantages de l'invention apparaîtront encore dans la description ci-après.

Aux dessins annexés, donnés à titre d'exemples non limitatifs:

— la figure 1 est une vue en élévation avec coupe et arrachements d'un robinet conforme à l'invention;

— la Figure 2 est une vue de détail à échelle agrandie du robinet de la Figure 1 montrant notamment l'extrémité de la tige adjacente à l'obturateur;

— la Figure 3 est une vue analogue à celle de la Figure 1, concernant une autre version du robinet conforme à l'invention;

— la Figure 4 est une vue de détail à échelle agrandie du robinet de la Figure 3 montrant notamment l'extrémité de la tige adjacente à l'obturateur;

— la Figure 5 est une vue en coupe suivant le plan V—V de la Figure 4;

— la Figure 6 est une vue analogue à celle de la Figure 4 montrant la mise en place des colliers de verrouillage axial de la tige;

— la Figure 7 est une vue de détail d'une troisième version du robinet conforme à l'invention, montrant notamment le verrouillage axial de la tige par une goupille;

— la Figure 8 est une vue analogue à celle de la Figure 2, concernant une quatrième version du robinet conforme à l'invention;

— la Figure 9 est une vue en coupe suivant le plan IX—IX de la Figure 8.

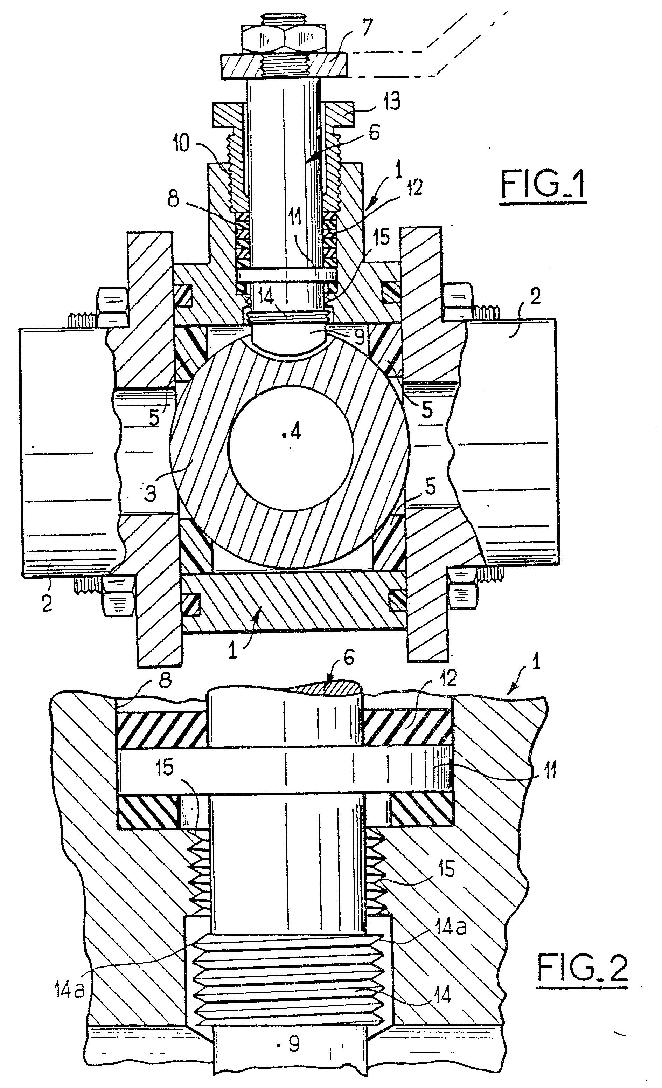

Dans la réalisation des Figures 1 et 2, le robinet comprend un corps 1 auquel sont fixés deux embouts coaxiaux 2. Le corps 1 renferme en tant qu'obturateur une boule 3 traversée par un alésage 4. A la Figure 1, l'axe de cet alésage 4 est perpendiculaire à celui des embouts 2, de sorte que la boule 3 est en position de fermeture. Cette position de fermeture, de même que la position d'ouverture de la boule 3 située à 90° de la précédente sont délimitées par des butées classiques non représentées. L'étanchéité de cette boule 3 avec les embouts 2 est réalisée au moyen de sièges annulaires 5 en une matière anti-friction telle que le polytétrafluoréthylène.

La boule 3 est commandée par une tige 6 reliée à une manette 7. Cette tige 6 est montée rotativement dans un alésage 8 ménagé dans le corps 1 perpendiculairement aux embouts 2. L'extrémité 9 de la tige 6 adjacente à la boule 3 est fixée de façon amovible à cette dernière, d'une manière connue en soi.

Lors du montage du robinet, cette tige 6 est engagée dans l'alésage 8 du corps 1 par l'extrémité 10 de cet alésage, car le diamètre intérieur du corps 1 ne permet pas d'introduire cette tige 6 par l'intérieur de ce dernier.

On voit d'autre part sur les Figures 1 et 2 que la tige 6 comprend une collerette 11 dont le diamètre correspond sensiblement au diamètre intérieur de l'alésage 8. L'étanchéité est réalisée par une garniture de presse-étoupe 12 qui est pressée contre la collerette 11 par un fouloir 13 vissé dans l'extrémité 10 de l'alésage 8. Ce fouloir 13, ainsi que la collerette 11, assurent le centrage de la tige 6 dans l'alésage 8.

Conformément à l'invention, l'extrémité 9 de la tige 6 comprend des moyens pour verrouiller axialement cette tige par rapport au corps 1 du robinet, après engagement de la tige 6 dans l'alésage 8 de ce corps.

Dans l'exemple des Figures 1 et 2, ces moyens de verrouillage sont constitués par une collerette filetée 14 ménagée sur l'extrémité 9 de la tige 6 et par un étranglement annulaire taraudé 15 faisant saillie dans l'alésage 8 du corps 1, en arrière de la collerette filetée 14 par rapport au sens d'engagement de la tige 6 dans l'alésage 8. Le taraudage de l'étranglement 15 correspond exactement au filetage de la collerette 14.

Pour monter la tige 6 dans le corps 1 du robinet, on l'engage dans l'alésage 8 jusqu'à ce que la collerette filetée 14 repose sur l'étranglement taraudé 15. On visse ensuite la collerette 14 de la tige 6 dans cet étranglement taraudé 15 jusqu'à dégagement complet de la collerette 14 de cet étranglement, comme indiqué sur les figures 1 et 2. On engage ensuite l'extrémité 9 de la tige 6 dans la boule 3, on met en place la garniture de presse-étoupe 12 et on visse le fouloir 13 dans l'alésage 4 pour comprimer la garniture 12.

On voit notamment sur la figure 2 que les filets 14a de la collerette 14 de la tige 6 constituent une butée à l'égard de l'étranglement 15 qui supprime tout risque d'éjection de la tige 6 vers l'extérieur du corps 1 du robinet sous l'effet de la pression exercée par le fluide contenu dans le robinet, même en cas de dévissage complet accidentel ou volontaire du fouloir 13.

En effet, pour que la collerette filetée 14 traverse l'étranglement taraudé 15, il faudrait pouvoir dévisser la tige 6, ce qui est impossible car la rotation angulaire de cette tige 6 est limitée à 90° par les butées (non représentées) qui délimitent les positions d'ouverture et de fermeture de la boule 3.

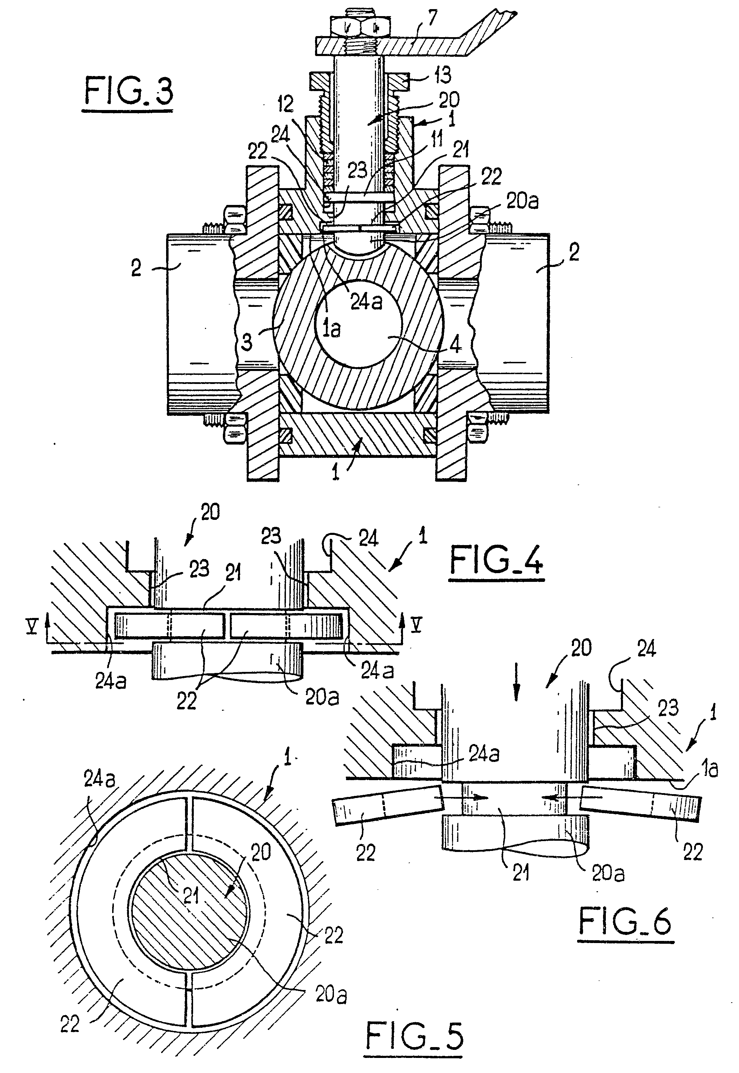

Dans la réalisation des figures 3 à 6, la tige 20 comprend à son extrémité 20a adjacente à la boule 3 une gorge annulaire 21 recevant deux demi-colliers de verrouillage 22 faisant saillie à l'avant d'un étranglement annulaire 23 ménagé dans l'alésage 24 du corps 1. Dans la position indiquée sur les figures 3 à 5, ces deux demi-colliers de verrouillage 22 sont calés radialement par l'extrémité adjacent 24a de l'alésage 24.

Le montage de la tige 20 dans le corps 1 du robinet est effectué en engageant cette tige dans l'alésage 24 jusqu'à ce que la gorge 21 fasse saillie par rapport à la surface intérieure 1a du corps 1, comme indiqué sur la figure 6. On engage ensuite les deux demi-colliers 22 dans cette gorge annulaire 21, en les déplaçant latéralement vers celle-ci comme indiqué sur la figure 6. La mise en place de la boule 3 dans l'extrémité 20a de la tige 20 a pour effet ensuite de ramener les demi-colliers 22 dans leur logement limité par l'étranglement 23 et l'extrémité adjacente 24a de l'alésage 24.

Les moyens de verrouillage axial de la tige 20 constitués par les demi-colliers 22 et l'étranglement 23 de l'alésage 24 rendent impossible toute éjection de la tige 20, en cas de dévissage accidentel du fouloir 23. La sécurité de fonctionnement est de ce fait comparable à celle procurée par la collerette filetée 14 et le taraudage 15 du robinet de la figure 1. Néanmoins, la réalisation des figures 3 à 6 exige le montage de pièces distinctes (les demi-colliers 22) de la tige 20, qui risquent d'être oubliées lors de ce montage.

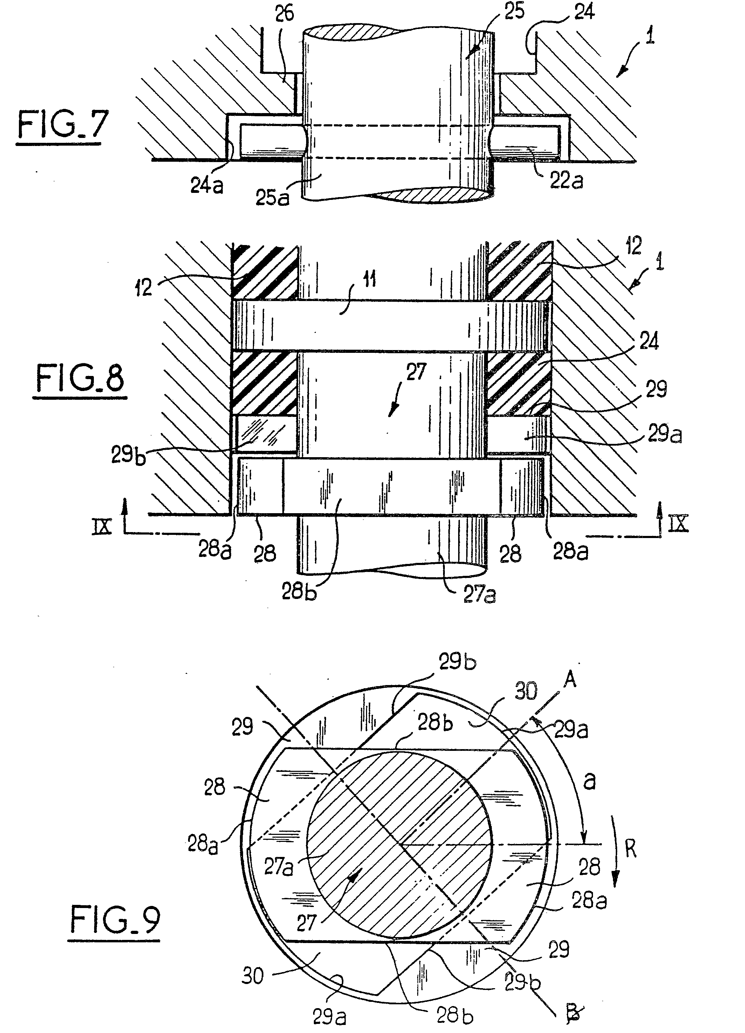

Les demi-colliers 22 peuvent être remplacés par une goupille 22a traversant l'extrémité 25a de la tige 25 comme indiqué sur la figure 7. Cette goupille 22a fait saillie à l'avant d'un étranglement annulaire 26 ménagé dans l'alésage 24 du corps du robinet. Les extrémités de cette goupille 22a sont, après montage de la tige 25, calées latéralement par l'extrémité adjacente 24a de l'alésage 24.

Dans la réalisation des figures 8 et 9, l'extrémité 27a de la tige 27 adjacente à la boule comprend deux protubérances diamétrales 28 faisant saillie à l'avant d'un étranglement 29 ménagé dans l'alésage 24 du corps · 1 du robinet. Cet étranglement 29 comprend deux évidements opposés 30 (voir Figure 9) dont le profil correspond à celui des protubérances 28 pour permettre à ces dernières de passer par l'étranglement 29 lors du montage de la tige 27.

Les protubérances 28 sont décalées angulairement par rapport aux évidements 30 de l'étranglement 29 pour constituer une butée par rapport à ce dernier entre les positions d'ouverture A et de fermeture B de l'obturateur (voir Figure 9).

Dans l'exemple représenté sur les Figures 8 et 9, les deux protubérances 28 comprennent à leurs extrémités libres opposées une portion cylindrique 28a concentrique avec l'axe de l'alésage 24 du corps 1 et de rayon sensiblement égale à cet alésage (voir Figure 9). De plus, ces deux portions cylindriques 28a sont raccordées par deux surfaces planes 28b parallèles, la distance comprise entre ces dernières étant sensiblement égale au diamètre de la tige 27.

Le profil intérieur de l'étranglement 29 comprend complémentairement deux surfaces opposées cylindriques 29a raccordées par deux surfaces planes parallèles 29b.

Dans le cas où les positions d'ouverture et de fermeture de l'obturateur sont situées à 90° l'une de l'autre, il est avantageux, comme indiqué sur la Figure 9, de décaler les portions cylindriques 28a des protubérances 28 d'un angle a égal à 45° par rapport aux portions cylindriques 29a correspondantes de l'étranglement 29, en position d'ouverture ou de fermeture de l'obturateur.

De ce fait, les surfaces en regard des protubérances 28 et de l'étranglement 29 se recouvrent suffisamment lorsque l'on passe (voir flèche R de la Figure 9) de la position d'ouverture A à la position de fermeture B et inversement. On supprime ainsi tout risque de passage des protubérances 28 dans l'étranglement 29 et par suite l'éjection de la tige 27 vers l'extérieur, étant donné que les positions d'ouverture A et de fermeture B sont limitées par des butées, non représentées, classiques.

Pour monter la tige 27 dans l'alésage 24 du corps 1 du robinet, on présente cette tige 27 dans l'alésage 24 d'une manière telle que les protubérances 28 s'engagent dans les évidements 30 correspondants de l'étranglement 29, puis on tourne la tige 27 de 45° pour décaler les protubérances 28 par rapport aux évidements 30. On met ensuite en place les joints de presse-étoupe 12 et on presse ceux-ci contre la collerette 11 en vissant le fouloir.

La réalisation des Figures 8 et 9 présente comme celle des Figures 1 et 2 les avantages d'une très grande simplicité de montage et d'apporter une très grande sécurité de fonctionnement en rendant le tige 27 non éjectable même après dévissage complet du fouloir.

Le robinet conforme à l'invention est par conséquent particulièrement adapté aux installations chimiques véhiculant des fluides corrosifs ou toxiques pour lesquels toute fuite est susceptible d'entraîner des dangers pour le personnel environnant.

On remarquera par ailleurs que les moyens de verrouillage axial de la tige 6, 20, 25 ou 27 peuvent être appliqués à tout type de robinet à tige de commande amovible par rapport à l'obturateur, y compris les robinets à section de passage faible par rapport à la longueur de la tige de commande.

Bien entendu, l'invention n'est pas limitée aux exemples que l'on vient de décrire et on peut apporter à ceux-ci de nombreuses modifications sans sortir du cadre de l'invention.

Ainsi, la boule 1 peut être remplacée par un boisseau ou un disque sans que ceci entraîne des modifications pour les moyens de verrouillage axial de la tige 6, 20, 25 ou 27.

## Revendications

1. Robinet comprenant un obturateur (3) commandé par une tige (6, 20, 24, 27) montée rotativement dans un alésage (8, 24) du corps (1) du robinet, cette tige étant amovible par rapport à l'obturateur et engagée dans l'alésage par l'extrémité (10) de celui-ci opposée à l'obturateur, caractérisé en ce que l'extrémité (9, 20a, 25a, 27a) de la tige adjacente à l'obturateur comprend des moyens (14, 15; 22, 23; 22a, 26; 28, 30) pour verrouiller axialement la tige par rapport au corps du robinet après engagement de la tige dans l'alésage de ce corps.

2. Robinet conforme à la revendication 1, caractérisé en ce que ladite extrémité (9) de la tige (6) comprend une collerette filetée (14) et en ce que l'alésage (8) du corps (1) du robinet comporte un étranglement annulaire taraudé (15) correspondant au filetage de la collerette de la tige, cette collerette faisant saillie à l'avant de l'étranglement précité après engagement complet de la tige dans l'alésage du corps.

3. Robinet conforme à la revendication 1, caractérisé en ce que ladite extrémité (20a) de la tige (20) comprend une gorge annulaire (21) recevant deux demi-colliers (22) de verrouillage faisant saillie à l'avant d'un étranglement annulaire (23) ménagé dans l'alésage (24) du corps, ces deux demi-colliers de verrouillage étant calés radialement par l'extrémité adjacente (24a) de l'alésage du corps.

4. Robinet conforme à la revendication 1, caractérisé en ce que ladite extrémité (25a) de la tige (25) comprend une goupille (22a) qui traverse la tige, les extrémités de cette goupille faisant saillie à l'avant d'un étranglement annulaire (26) ménagé dans l'alésage (24) du corps et ces extrémités de la goupille étant calées radialement par l'extrémité adjacente (24a) de l'alésage du corps.

5. Robinet conforme à la revendication 1, caractérisé en ce que ladite extrémité (27a) de la tige (27) comprend deux protubérances diamétrales (28) faisant saillie à l'avant d'un étranglement (29) ménagé dans l'alésage (24) du corps, cet étranglement comportant deux évidements opposés (30) dont le profil correspond à celui des protubérances, ces protubérances étant décalées angulairement par rapport aux évidements correspondants pour constituer une butée par rapport à l'étranglement entre les positions d'ouverture (A) et de fermeture (B) de l'obturateur.

6. Robinet conforme à la revendication 5, les positions d'ouverture et de fermeture de l'obturateur étant situées à 90° l'une de l'autre, caractérisé en ce que les protubérances (28) de la tige (27) sont décalées de 45° par rapport aux évidements (30) correspondants de l'étranglement, en position d'ouverture ou de fermeture de l'obturateur.

7. Robinet conforme à l'une quelconque des revendications 5 ou 6, caractérisé en ce que les protubérances (28) et l'étranglement comprennent à leurs extrémités opposées une portion cylindrique (28a) concentrique avec l'axe de l'alésage (24) du corps (1) et de rayon de courbure sensiblement égal à cet alésage, ces deux portions cylindriques étant raccordées par deux surfaces planes et parallèles (28b), la distance comprise entre ces dernières étant sensiblement égale au diamètre de la tige (27).

## Claims

1. Cock comprising a plug (3) actuated by a stem (6, 20, 24, 27) rotatably mounted within a bore (8, 24) of the cock body (1), this stem being removable with respect to the plug and engaged within the bore at the end (10) of this latter which is remote from the plug, characterized in that the end (9, 20a, 25a, 27a) of the stem adjacent to the plug comprises means (14, 15; 22, 23; 22a, 26; 28, 30) for axially locking the stem with respect to the cock body after engagement of the stem within the bore of this body.

2. Cock in accordance with claim 1, characterized in that said end (9) of the stem (6) has a threaded annular boss (14) and that the bore (8) of the cock body (1) has an internally-threaded annular throat (15) corresponding to the screwthread of the annular boss of the stem, said annular boss being such as to form a projection in front of the aforesaid throat after complete engagement of the stem within the bore of the body.

3. Cock in accordance with claim 1, characterized in that said end (20a) of the stem (20) has an annular groove (21) for receiving two locking half-collars (22) forming a projection in front of an annular throat (23) formed in the bore (24) of the body, these two locking half-collars being keyed radially by the adjacent end (24a) of the bore of the body.

4. Cock in accordance with claim 1, characterized in that said end (25a) of the stem (25) is provided with a locking-pin (22a) which passes through the stem, the ends of this pin being such as to form a projection in front of an annular throat (26) formed in the bore (24) of the body and these ends of the pin being keyed radially by the adjacent end (24a) of the bore of the body.

5. Cock in accordance with claim 1, characterized in that said end (27a) of the stem (27) is provided with two diametral lugs (28) forming projections at the front of a throat (29) formed in the bore (24) of the body, this throat being provided with two opposite recesses (30), the profile of which corresponds to that of the lugs, these lugs being angularly displaced with respect to the corresponding recesses in order to constitute a stop with respect to the throat between the open position (A) and the closed position (B) of the plug.

6. Cock in accordance with claim 5, the open end closed positions of the plug being located at 90° with respect to each other, characterized in that the lugs (28) of the stem (27) are displaced by 45° with respect to the corresponding recesses (30) of the throat in the open or closed position of the plug.

7. Cock in accordance with either claim 5 or claim 6, characterized in that the lugs (28) and the throat are provided at their opposite ends with a cylindrical portion (28a) which is concentric with the axis of the bore (24) of the body (1) and has a radius of curvature which is substantially equal to this bore, these two cylindrical portions being joined to each other by two flat and parallel surfaces (28b), the distance between these latter being substantially equal to the diameter of the stem (27).

**Patentansprüche**

1. Hahn mit einem Verschlußkörper (3), der durch eine drehbar in einer Bohrung (8, 24) des Hahngehäuses (1) gelagerte Spindel (6, 20, 24, 27) betätigt wird, wobei die Spindel von dem Verschlußkörper abnehmbar ist und an dem dem Verschlußkörper abgewandten Ende (10) der Bohrung in diese eingeführt wird, dadurch gekennzeichnet, daß das dem Verschlußkörper benachbarte Ende (9, 20a, 25a, 27a) der Spindel Mittel (14, 15; 22, 23; 22a, 26; 28, 30) zum axialen Verriegeln der Spindel gegenüber dem Hahngehäuse nach dem Einführen der Spindel in die Bohrung des Gehäuses aufweist.

· 2. Hahn nach Anspruch 1, dadurch gekennzeichnet, daß das Ende (9) der Spindel (6) einen Gewindebund (14) und die Bohrung (8) des Hahngehäuses (1) eine mit einem Gewinde versehene Einschnürung (15) aufweist, die dem Gewinde des Bundes der Spindel entspricht, wobei der Bund nach dem vollständigen Einführen der Spindel in die Gehäusebohrung vor der Einschnürung liegt.

3. Hahn nach Anspruch 1, dadurch gekennzeichnet, daß das Ende (20a) der Spindel (20) eine Ringnut (21) für die Aufnahme zweier Verriegelungs-Halbkragen (22) aufweist, die vor einer in der Bohrung (24) des Gehäuses vorhandenen ringförmigen Einschnürung (23) vorstehen, und daß die beiden Verriegelungs-Halbkragen durch das benachbarte Ende (24a) der Gehäusebohrung radial festgelegt sind.

4. Hahn nach Anspruch 1, dadurch gekennzeichnet, daß das Ende (25a) der Spindel (25) einen durch die Spindel hindurchgehenden Stift (22a) aufweist, dessen Enden vor einer in der Bohrung (24) des Gehäuses befindlichen ringförmigen Einschnürung (26) vorspringen und daß die Enden des Stiftes durch das benachbarte Ende (24a) der Gehäusebohrung radial festgelegt sind.

5. Hahn nach Anspruch 1, dadurch gekennzeichnet, daß das Ende (27a) der Spindel (27) zwei diametrale Vorsprünge (28) aufweist, die vor einer in der Gehäusebohrung (24) angebrachten Einschnürung (29) vorstehen, daß diese Einschnürung zwei einander gegenüberliegende Ausnehmungen (30) hat, deren Profil demjenigen der Vorsprünge entspricht und daß die Vorsprünge gegenüber den entsprechenden Ausnehmungen winklig versetzt sind, um gegenüber der Einschnürung zwischen der Offenstellung (A) und der Schließstellung (B) des Verschlußkörpers einen Anschlag zu bilden.

6. Hahn nach Anspruch 5, bei dem sich die Offenstellung und die Schließstellung des Verschlußkörpers in einem Winkel von 90° zueinander befinden, dadurch gekennzeichnet, daß die Vorsprünge (28) der Spindel (27) gegenüber den entsprechenden Ausnehmungen (30) der Einschnürung in der Offenstellung oder der Schließstellung des Verschlußkörpers um 45° versetzt sind.

7. Hahn nach einem der Ansprüche 5 oder 6, dadurch gekennzeichnet, daß die Vorsprünge (28) und die Einschnürung an ihren entgegengesetzten Enden einen mit der Achse der Bohrung (24) des Gehäuses (1) konzentrischen zylindrischen Abschnitt (28a) mit einem mit der Bohrung etwa gleichen Krümmungsradius haben, wobei diese beiden zylindrischen Abschnitte durch zwei ebene parallele Flächen (28b) verbunden sind, deren gegenseitiger Abstand etwa dem Durchmesser der Spindel (27) entspricht.

0 006 902

FIG_1

FIG_2

**FIG.3**

**FIG.4**

**FIG.6**

**FIG.5**

## FIG.7

## FIG.8

## FIG.9